Europäisches Patentamt

European Patent Office

Office européen des brevets

(19)

(11) **EP 1 528 654 A1**

(12) **EUROPEAN PATENT APPLICATION**

(43) Date of publication:
04.05.2005 Bulletin 2005/18

(51) Int Cl.⁷: **H02J 7/34**

(21) Application number: **04022505.4**

(22) Date of filing: **22.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **28.10.2003 JP 2003367629**

(71) Applicant: **Nec Tokin Corporation
Sendai-shi, Miyagi (JP)**

(72) Inventor: **Sasaki, Hiroshi
Taihaku-ku Sendai-shi Miyagi (JP)**

(74) Representative: **Hofer, Dorothea, Dipl.-Phys. et al
Prüfer & Partner GbR
Patentanwälte
Harthauser Strasse 25 d
81545 München (DE)**

(54) **Circuit for battery/capacitor power source**

(57)     A power circuit includes a linear voltage control block 5 for stepping down a charged voltage of a power assist capacitor to a predetermined voltage value within an operating voltage range of a load when an output voltage of a power supply in the form of a battery 2 exceeds an upper limit value of the operating voltage range of the load, and for controlling the charged voltage of the power assist capacitor to a voltage value substantially equal to the output voltage of the power supply when the output voltage of the power supply falls within the operating voltage range of the load, and a current control block 6 for controlling an upper limit value of the output current of the power supply using a predetermined current value in a power range necessary for operating the load.

FIG. 4

EP 1 528 654 A1

**Description**

This application claims priority to prior Japanese patent application JP 2003-367629, the disclosure of which is incorporated herein by reference.

Background of the Invention:

This invention relates to a power circuit using a battery and, in particular, relates to the power circuit which performs a circuit control for controlling a generation voltage of the battery to match an operating voltage range of a load and a circuit control for controlling the upper limit of a discharge current of the battery and which, when the load becomes heavy so that the discharge current exceeds its upper limit value, carries out a power assist using the energy stored in an electric double layer capacitor to thereby efficiently discharge the charged capacity of the battery.

Referring to Japanese Patent Application Publication JP-A-H09-219933, there has been proposed a three power supply type electronic device that can use three kinds of batteries, i.e. a primary battery (e.g. manganese dry battery or alkaline dry battery) and two kinds of secondary batteries (alkaline secondary battery, e.g. nickel-cadmium battery or nickel-hydrogen battery, and lithium-ion secondary battery).

The proposed electronic device is configured to judge the kind of the loaded battery among the three kinds of the batteries having different charge-discharge characteristics according to a shape of the loaded battery, perform a charge-discharge control suitable for the loaded battery, and convert a generated voltage of the loaded battery into a predetermined DC voltage via a DC-DC converter to thereby supply required DC voltages to respective circuits in the electronic device.

Presently, batteries are mainly used as power supplies of portable electronic devices. There are available many kinds of batteries depending on operation principles, materials, and so forth, and each kind has its unique feature. For example, a primary battery such as a manganese dry battery or an alkaline dry battery has a nominal voltage of 1.5V and, although it can not be recharged, it has the standardized shape and is easy to obtain at a low price.

An alkaline secondary battery such as a nickel-cadmium battery or a nickel-hydrogen battery has a nominal voltage of 1.2V. It can be repeatedly recharged and those alkaline secondary batteries have recently been on the market that are compatible in shape with the foregoing first battery.

Further, a lithium-ion secondary battery has a nominal voltage of 3.7V and has been taking a major position as a battery of a highly functional portable electronic device because of its high energy performance.

As described above, the batteries have their own features depending on the kinds thereof and are poor in compatibility with respect to generation voltages thereof. The foregoing prior art publication has proposed the technique which, as described above, makes it possible to use the plurality of kinds of batteries in the single electronic device by converting the generated voltage of the loaded battery into the predetermined DC voltage via the DC-DC converter to thereby supply the required DC voltages to the respective circuits in the electronic device.

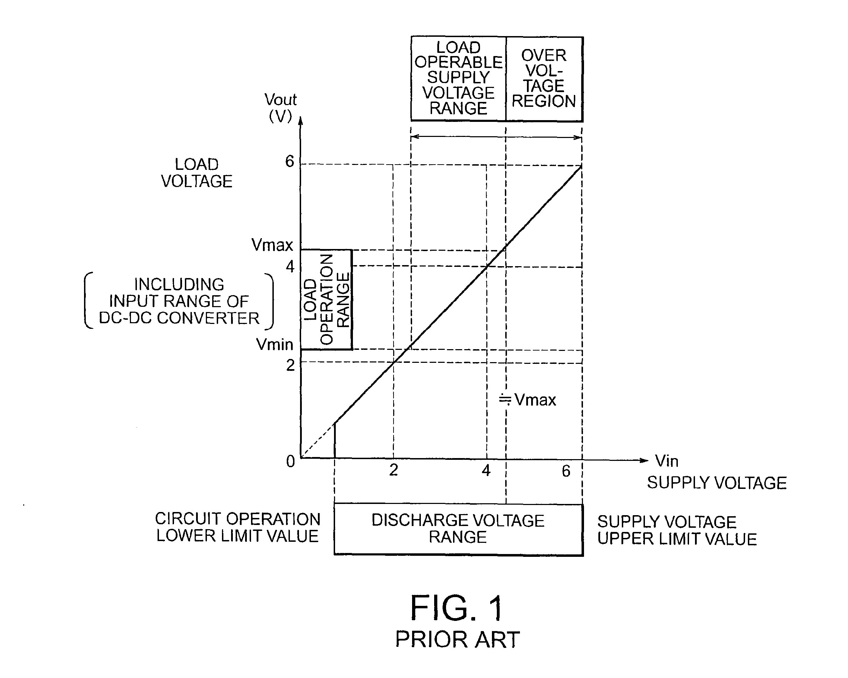

Fig. 1 shows a relationship between a supply voltage and a load voltage, i.e. a voltage applied to a load, according to the conventional technique, wherein the axis of abscissas represents supply voltage values and the axis of ordinates represents values of voltage applied to the load.

According to the conventional technique that uses the loaded battery as the power supply and converts the generated voltage of the loaded battery into the predetermined DC voltage by the use of the DC-DC converter to thereby supply the required DC voltages to the respective circuits in the electronic device, when dealing with more kinds of batteries, since the generation voltages of the batteries extend over a wide range, there is possibility that a discharge voltage range of the loaded battery does not fall within a load operable supply voltage range, i.e. a supply voltage range in which the load (including the DC-DC converter) is operable, as shown in Fig. 1.

In general, the DC-DC converter reduces its conversion efficiency as a difference between input and output voltages thereof increases. That is, inputting the supply voltage over the wide range causes reduction in DC-DC conversion efficiency of the DC-DC converter, and therefore, the discharge efficiency of the batteries is lowered in the state where the generation voltages of the batteries extend over the wide range.

Further, when the generated voltage of the loaded battery increases to exceed an input upper limit voltage of the DC-DC converter, for example, when the loaded battery is fully charged, the load is applied with an overvoltage so that there is possibility of causing trouble on operation of the load due to operation of a load protection function or the like.

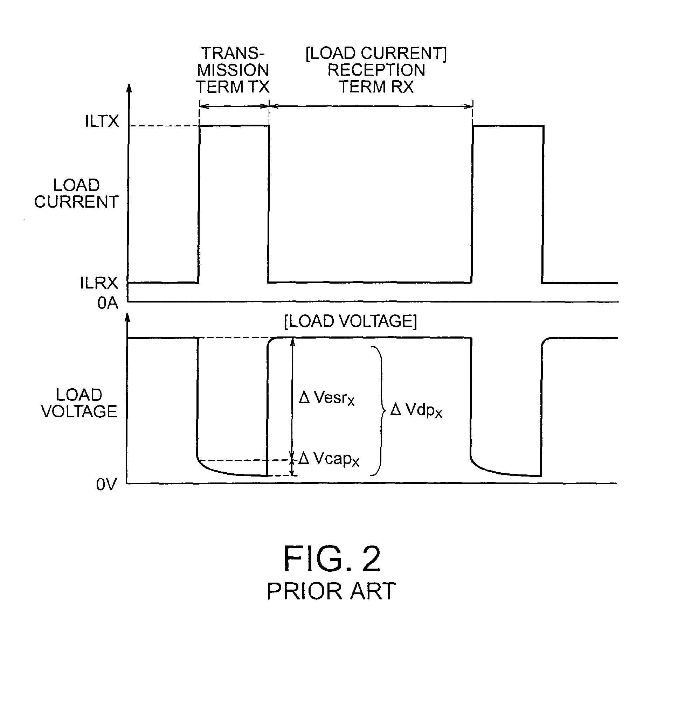

Fig. 2 shows voltage and current waveforms in a load pattern typified by a radio communication device such as a portable telephone, according to a conventional technique, wherein the axis of abscissas represents time values and the axis of ordinates represents voltage values and current values. As shown in Fig. 2, this load pattern is a load pattern according to the time division multiple access system which is now taking a major position in the portable telephone communications, wherein a transmission term TX and a reception term RX alternately exist at a constant period, and the load consumes a large current ILTX in the transmission term TX while the load consumes a small current ILRX in the reception term RX.

A battery is subjected to a voltage step-down due to an internal resistance and discharge of the charged capacity. Therefore, in the transmission term TX, the generation voltage is subjected to a voltage step-down ∆Vdpx in the sum of a voltage step-down ∆Vesrx due to the internal resistance of the power supply (battery) and a voltage step-down ∆Vcapx due to the capacitive discharge of the battery, caused by the load current value ILTX. Conversely, in the reception term RX, since the voltage step-down ∆Vdpx does not occur, the generation voltage increases correspondingly.

As described above, in the load pattern according to the time division multiple access system, the generation voltage of the battery changes synchronously with the transmission term TX and the reception term RX due to the influence of the internal resistance and the capacitive discharge of the battery.

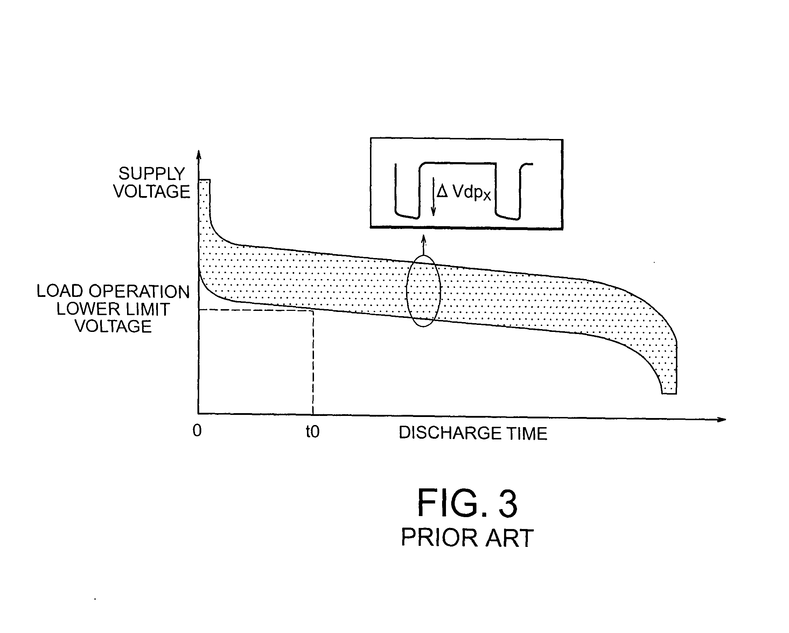

Fig. 3 shows a discharge curve of the battery in continuous operation of the load pattern shown in Fig. 2 according to the conventional technique, wherein the axis of abscissas represents discharge time and the axis of ordinates represents generated voltage of the battery serving as the supply voltage. Due to the change in generation voltage of the battery as described using Fig. 2, the discharge curve is caused to have a voltage width of ∆Vdpx in the sum of ∆Vesrx and ∆Vcapx caused by the foregoing load current value ILTX. As shown in Fig. 3, in the discharge according to the foregoing load pattern, the voltage value in the transmission term TX reaches an operation lower limit voltage of the load at a time t0.

The discharge life of the battery according to such a load pattern is defined by a time in which the voltage with a heavy load reaches the operation lower limit voltage. Accordingly, even if the battery reaches its final voltage with the heavy load to end its life, it does not reach a final voltage with a light load and has a remaining capacity that can operate the load, which thus causes reduction in discharge efficiency of the battery.

As described above, when the conversion of the battery voltage is carried out by the use of the DC-DC converter in the electronic device which is operable with the different kinds of batteries, it is not possible to prevent reduction in conversion efficiency caused by compatibility of the DC-DC converter over the wide voltage range, occurrence of trouble due to the extensive input voltage range, or occurrence of overvoltage in a no-load condition.

Further, in case of the load that periodically repeats the heavy load and the light load like the load pattern according to the time division multiple access system typified by the radio communication device, since the generation voltage of the battery changes due to the influence of the voltage step-down caused by the internal resistance and the capacitive discharge of the battery, the battery cannot be efficiently discharged up to its final voltage because of battery-off warning, power shut-down, or the like in the state where the battery still has the remaining capacity.

Summary of the Invention:

In order to solve the foregoing problems, a power circuit according to this invention uses a primary battery, a secondary battery, a solar cell, or a fuel cell as a power supply and comprises voltage step down control means for stepping down a charged voltage of a power assist capacitor to a predetermined voltage value within an operating voltage range of a load when an output voltage of the power supply exceeds an upper limit value of the operating voltage range of the load; linear voltage control means for controlling the charged voltage of the power assist capacitor to a voltage value substantially equal to the output voltage of the power supply when the output voltage of the power supply falls within the operating voltage range of the load; and current control means for controlling an upper limit value of the output current of the power supply using a predetermined current value in a power range necessary for operating the load, wherein the power assist capacitor charged by the output current of the power supply is disposed at a power supply unit of the load.

It may be arranged that the power supply is a battery formed by a predetermined number of unit cells connected in series, the battery capable of electromotive force values in operating the load such that most of time in time transition of the output voltage of the power supply falls within the operating voltage range of the load. It may be arranged that the voltage step down control means detects a charged voltage value of the power assist capacitor and steps it down to the predetermined voltage value within the operating voltage range of the load. It may be arranged that the linear voltage control means turns on a switching element connected in series to the power supply. It may be arranged that the current control means controls a current or a voltage as a control input to a switching element connected in series to the power supply. It may be arranged that the power assist capacitor is of an electric double layer type and has an internal resistance value smaller than that of the power supply. It may be arranged that the power assist capacitor is of an electric double layer type and has a capacitance that is capable of power supplying to the load during a time when a load current exceeds the upper limit value of the output current of the power supply.

Brief Description of the Drawings:

Fig. 1 is a diagram showing a relationship between a supply voltage and a load voltage (voltage applied to load) according to a conventional technique;
Fig. 2 is a diagram showing voltage and current waveforms in a load pattern of a time division multiple access communication system according to a conventional technique;
Fig. 3 is a diagram showing a discharge characteristic in continuous operation of the load pattern of the time division multiple access communication system according to the conventional technique;

Fig. 4 is a block diagram showing a structure of a power circuit according to a first preferred embodiment of this invention;

Fig. 5 is a diagram showing a relationship between a supply voltage and a load voltage (voltage applied to load) according to the first embodiment of this invention;

Fig. 6 is a diagram showing a typical discharge characteristic of an alkaline dry battery;

Fig. 7 is a diagram showing cumulative discharge times with respect to equal voltage widths, respectively, of the discharge characteristic of the alkaline dry battery;

Fig. 8 is a diagram showing voltage and current waveforms in a load pattern of a time division multiple access communication system according to the first embodiment of this invention;

Fig. 9 is a diagram showing a discharge characteristic in continuous operation of the load pattern of the time division multiple access communication system according to the first embodiment of this invention;

Fig. 10 is a block diagram showing a structure of a power circuit according to a second preferred embodiment of this invention;

Fig. 11 is a diagram showing a relationship between a supply voltage and a load voltage (voltage applied to load) according to the second embodiment of this invention;

Fig. 12 is a block diagram showing a structure of a power circuit according to a third preferred embodiment of this invention; and

Fig. 13 is a block diagram showing a structure of a power circuit according to a fourth preferred embodiment of this invention.

Description of the Preferred Embodiments:

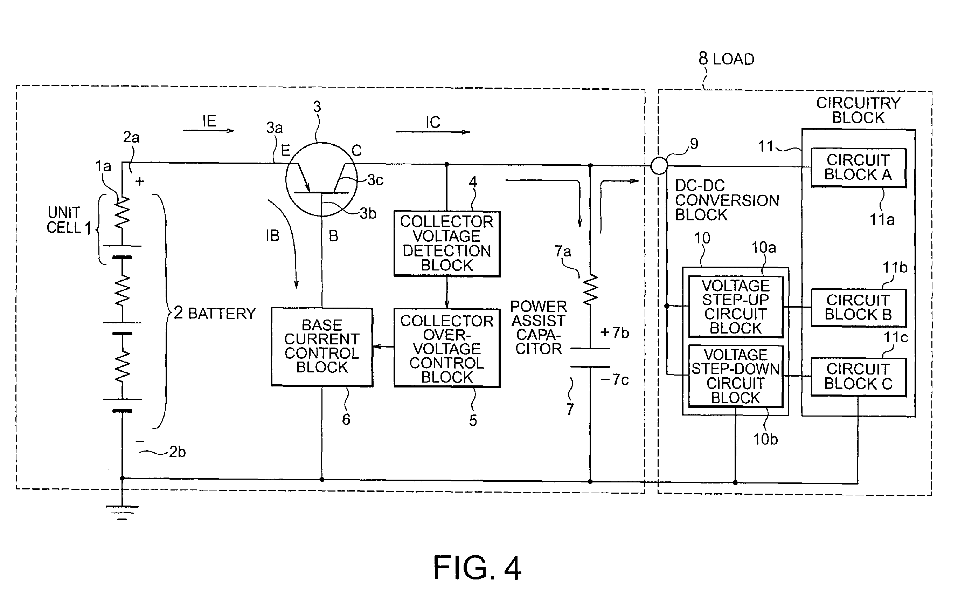

Referring to the drawings, description will be made about a first preferred embodiment of this invention. Fig. 4 is a circuit block diagram showing the first embodiment of this invention.

In Fig. 4, a power circuit comprises a power supply in the form of a battery 2 having a positive electrode 2a with the highest potential and a negative electrode 2b with the lowest potential. The battery 2 is composed of three unit cells 1 connected in series and each having an internal resistance 1a. The power circuit further comprises a PNP transistor 3 having an emitter terminal 3a, a base terminal 3b, and a collector terminal 3c, a collector voltage detection block 4, a collector overvoltage control block 5, a base current control block 6, a power assist capacitor 7 having an internal resistance 7a, a positive electrode 7b, and a negative electrode 7c, and a load 8. The load 8 comprises a power supply unit 9, a DC-DC conversion block 10, and a circuitry block 11. The DC-DC conversion block 10 comprises a voltage step-up circuit block 10a and a voltage step-down circuit block 10b. The circuitry block 11 comprises a circuit block A 11 a, a circuit block B 11 b, and a circuit block C 11c.

The positive electrode 2a of the battery 2 is connected to the emitter terminal 3a of the PNP transistor 3, the base terminal 3b is connected to the base current control block 6, and the collector terminal 3c is connected to the collector voltage detection block 4, the positive electrode 7b of the power assist capacitor 7 having the internal resistance 7a, and the power supply unit 9 of the load 8. The power supply unit 9 is connected to the circuit block A 11 a of the circuitry block 11, and the voltage step-up circuit block 10a and the voltage step-down circuit block 10b of the DC-DC conversion block 10. The voltage step-up circuit block 10a is connected to the circuit block B 11 b, and the voltage step-down circuit block 10b is connected to the circuit block C 11 c. The collector voltage detection block 4 is connected to the collector overvoltage control block 5, and the collector overvoltage control block 5 is connected to the base current control block 6. In this embodiment, ground terminals of the circuits are connected to the negative electrode 2b of the battery 2.

Hereinbelow, description will be made about operations of the circuit blocks in this embodiment.

The total internal resistance of the power supply takes a value in the sum of the three internal resistances 1a of the unit cells 1 connected in series. The PNP transistor 3 is connected in series to the power supply and, given that a current amplification factor is represented by hFE, the following equation (1) is established between a base current IB and a collector current IC.

$$IC = hFE \times IB \qquad (1)$$

where IC represents the collector current, IB the base current, and hFE the current amplification factor (constant of proportion).

The collector voltage detection block 4 detects a voltage at the collector terminal 3c and feeds a detection value to the collector overvoltage control block 5. When the collector voltage exceeds a preset voltage value, the collector overvoltage control block 5 sends a signal for reducing the base current IB to the base current control block 6 to thereby reduce the collector voltage so as to be the preset voltage value.

On the other hand, when the collector voltage is lower than the preset voltage value, the collector overvoltage control block 5 sends to the base current control block 6 a signal for increasing the base current IB to a predetermined upper limit current value $IB_{max}$ as an ON-control signal of the PNP transistor 3 to thereby flow a predetermined upper limit collector current ICmax given by the foregoing equation (1).

The power assist capacitor 7 is charged with the collector current IC so as to have a voltage value equal to the collector voltage. The internal resistance 7a of the power assist capacitor 7 has a resistance value that is set smaller than the internal resistance of the battery 2, i.e. the sum of the three internal resistances 1a connected in series in Fig.4, so that the power assist capacitor 7 discharges for power assist when the load current exceeds the upper limit collector current $IC_{max}$.

The power supply unit 9 serves as a collective power terminal of the load 8 so that the power is supplied to the DC-DC conversion block 10 and the circuitry block 11 of the load 8 via the power supply unit 9. The circuit block A 11 a is directly supplied with the supply voltage, while the circuit block B 11 b is supplied with a voltage stepped up by the voltage step-up circuit block 10a and the circuit block C 11c is supplied with a voltage stepped down by the voltage step-down circuit block 10b.

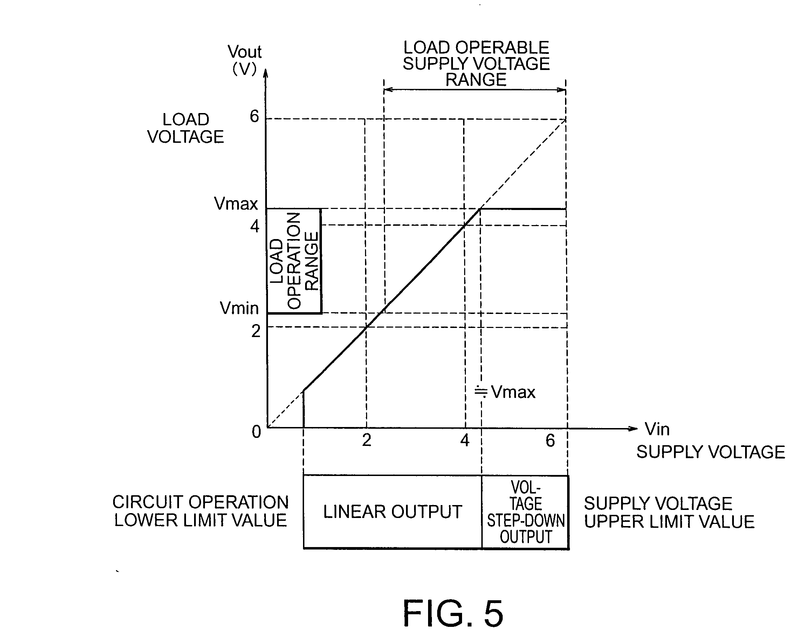

Fig. 5 shows a relationship between the supply voltage and the load voltage, i.e. the voltage applied to the load, according to the first embodiment of this invention, wherein the axis of abscissas represents supply voltage values and the axis of ordinates represents load voltage values.

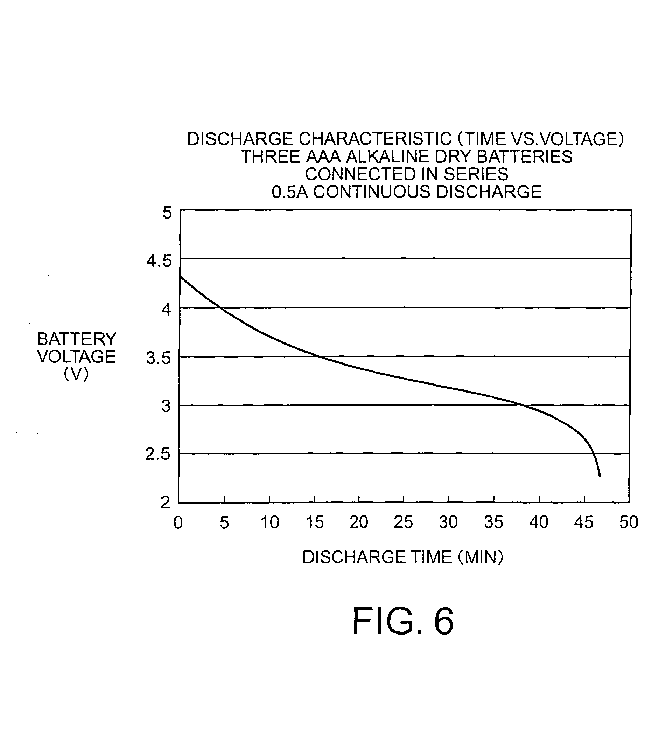

Fig. 6 shows a typical discharge curve obtained by constant current discharge of an alkaline dry battery (three unit cells connected in series), wherein the axis of abscissas represents discharge time and the axis of ordinates represents discharge voltage.

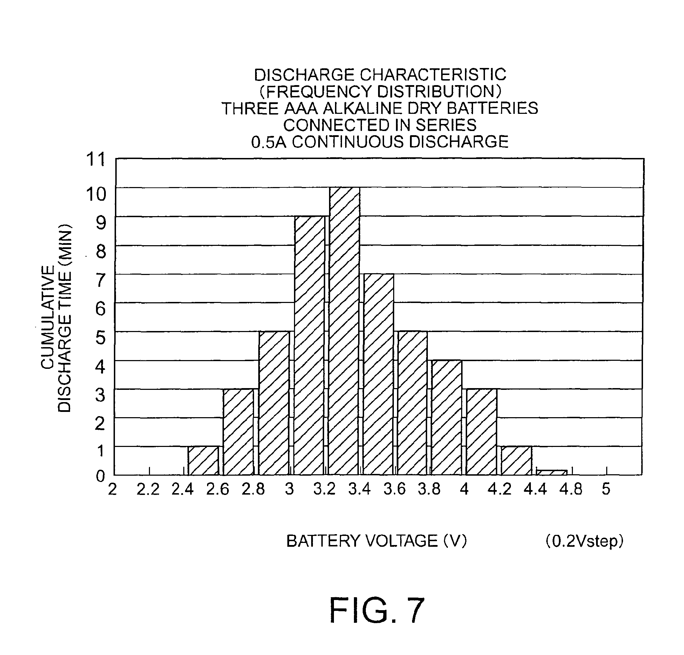

Fig. 7 shows cumulative discharge times with respect to equal discharge voltage widths (0.2V widths), respectively, of the discharge curve shown in Fig. 6, wherein the axis of abscissas represents discharge voltage values and the axis of ordinates represents the cumulative discharge times of the respective equal voltage widths.

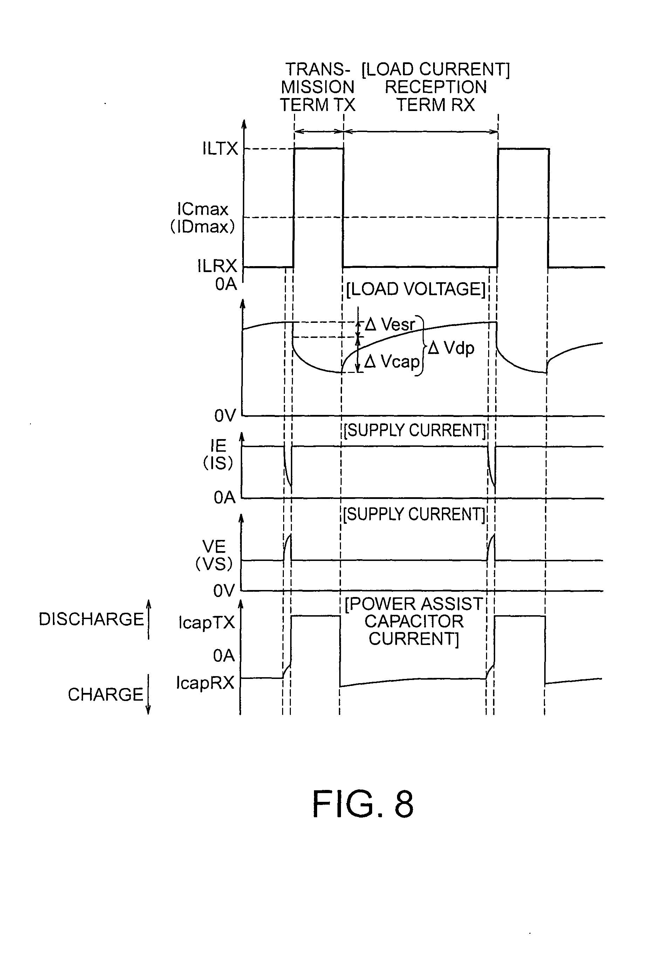

Fig. 8 shows voltage and current waveforms in a load pattern of the time division multiple access communication system according to the first embodiment of this invention, wherein the axis of abscissas represents time values and the axis of ordinates represents voltage values and current values corresponding to respective characteristics.

The load pattern shown in Fig. 8 is a load pattern according to the time division multiple access system which is now taking a major position in the portable telephone communications, wherein a transmission term TX and a reception term RX alternately exist at a constant period, and the load consumes a large current ILTX in the transmission term TX while the load consumes a small current ILRX in the reception term RX.

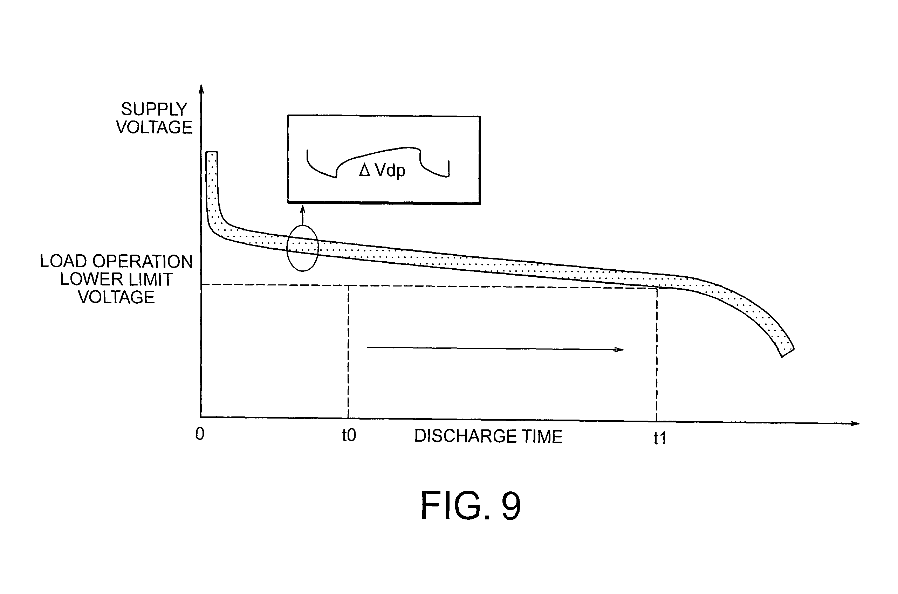

Fig. 9 shows a discharge curve of the power supply in continuous operation of the load pattern shown in Fig. 8 according to the first embodiment of this invention, wherein the axis of abscissas represents discharge time and the axis of ordinates represents generated voltage of the battery serving as the supply voltage.

Referring to Figs. 5 to 9, the first embodiment of this invention will be described in detail. As shown in Fig. 5, an upper limit value of a collector voltage (i.e. a charged voltage of the power assist capacitor 7) is preset to an upper limit value Vmax of an operation range of the load.

When the collector voltage detection block 4 detects that the collector voltage (i.e. the charged voltage of the power assist capacitor 7) has exceeded the upper limit value Vmax of the operation range of the load, it notifies the collector overvoltage control block 5 that the collector voltage is in an overvoltage state.

In response to receipt of the detection of overvoltage from the collector voltage detection block 4, the collector overvoltage control block 5 sends a command for reducing a base current IB to the base current control block 6.

In response to receipt of the command for reduction of the base current IB from the collector overvoltage control block 5, the base current control block 6 reduces the base current IB of the PNP transistor 3 to thereby step down the collector voltage (i.e. the charged voltage of the power assist capacitor 7) to a preset voltage value.

When the collector voltage detection block 4 detects that the collector voltage (i.e. the charged voltage of the power assist capacitor 7) is equal to or less than the upper limit value Vmax of the operation range of the load, the base current control block 6 controls the base current IB to a predetermined upper limit current value IBmax which turns on the PNP transistor 3. This causes a collector current IC to be ICmax determined by the foregoing equation (1) so that an upper limit value of output current of the power supply is limited by ICmax. In this event, the supply voltage and the collector voltage (the charged voltage of the power assist capacitor 7) are in a linear relationship.

When the collector voltage detection block 4 detects that the collector voltage (the charged voltage of the power assist capacitor 7) is a lower limit value Vmin of the operation range of the load, the load stops in operation. In this event, the supply voltage and the collector voltage (the charged voltage of the power assist capacitor 7) continue to keep the linear relationship down to an operation lower limit value of the circuit as shown in Fig. 5.

As shown in Fig. 6, the discharge characteristic of the battery is nonlinear, and therefore, the discharge time differs per discharge voltage in the constant current discharge. As seen from Fig. 7 showing the cumulative discharge times in the respective equal voltage widths, in case of, for example, three alkaline dry batteries connected in series, the cumulative discharge times are substantially normally distributed with respect to 3.2V to 3.4V over the range of 2.4V to 4.8V.

In the distribution of the cumulative discharge times, 3.0V to 3.6V account for about 55% of the total discharge time, and 2.8V to 3.8V account for about 75% of the total discharge time. As shown in Fig. 7, the generated voltage range of the battery in the form of three unit cells connected in series covers 2.4V to 4.8V, while the voltage range of 2.8V to 3.8V upon discharge accounts for about 75% of the total discharge time. Accordingly, the power supply in the form of the battery composed of three unit cells connected in series is suitable for a load whose operation range is 2.8V to 3.8V. Although the range of 3.8V to 4.8V causes overvoltage to the load, it is possible to operate the load without causing the overvoltage by using the foregoing voltage step down control means in such an event.

As shown in Fig. 8, in case of the load that periodically repeats a heavy load (transmission term TX) and a light load (reception term RX), the upper limit collector current ICmax is set to a value that is smaller than the current value ILTX of the transmission term TX, but is greater than the current value ILRX of the reception term RX, and is substantially equal to the average current value of the load.

The upper limit base current value $IB_{max}$ is also determined by the foregoing equation (1). The power assist capacitor 7 has a capacitance that is capable of power supplying in the transmission term TX and further capable of completing recharge within the reception term RX.

Now, the operation in the transmission term TX will be described. The load current in the transmission term TX is ILTX, the output current of the battery 2 serving as the supply current is IE, the discharge current of the power assist capacitor 7 is IcapTX, and these three current values establish a relationship as given by the following equation (2).

$$IE + IcapTX = ILTX \qquad (2)$$

where IE represents the supply current, IcapTX the discharge current of the power assist capacitor 7, and ILTX the load current in the transmission term TX.

The foregoing equation (2) represents that a shortage of the supply current relative to the load current is supplemented by the discharge current of the power assist capacitor 7. Since the power assist capacitor 7 is connected to the power supply unit 9 of the load 8, the charged voltage of the power assist capacitor 7 becomes equal to the load voltage.

The charged voltage of the power assist capacitor 7 is subjected to a voltage step-down ΔVdp in the sum of a voltage step-down ΔVesr due to the internal resistance 7a of the power assist capacitor 7 and a voltage step-down ΔVcap due to capacitive discharge of the power assist capacitor 7, caused by the discharge current value IcapTX of the power assist capacitor 7. The supply voltage is subjected to a voltage step-down due to the internal resistance 1a x 3 of the power supply (battery) and discharge of the charged capacity of the power supply (battery) caused by the supply current value IE, so as to become VE.

Now, the operation in the reception term RX will be described. The load current in the reception term RX is ILRX, the output current of the battery 2 serving as the supply current is IE, the recharge current of the power assist capacitor 7 is IcapRX, and these three current values establish a relationship as given by the following equation (3).

$$IE - IcapRX = ILRX \qquad (3)$$

where IcapRX represents the recharge current of the power assist capacitor 7, and ILRX the load current in the reception term RX.

The foregoing equation (3) represents that the supply current feeds the load current and recharges the power assist capacitor 7. The voltage of the power assist capacitor 7 subjected to the voltage step-down in the transmission term TX restores, by the charge current IcapRX, a voltage corresponding to the voltage step-down ΔVdp in the sum of the voltage step-down ΔVesr due to the internal resistance 7a of the power assist capacitor 7 and the voltage step-down ΔVcap due to the capacitive discharge of the power assist capacitor 7.

Since the upper limit collector current ICmax is set to the value that is substantially equal to the average current value of the load, the supply current discharges at substantially a constant value. At the completion of the recharge, the charge current decreases due to an increase in impedance of the power assist capacitor 7 so that the supply current converges to the load current value ILRX of the reception term RX.

As shown in Fig. 9, due to the voltage and current waveforms as described using Fig. 8, the discharge curve of the power supply in this embodiment is caused to have the voltage width ΔVdp in the sum of ΔVesr and ΔVcap caused by the discharge current value IcapTX of the power assist capacitor 7. As shown in Fig. 9, in the discharge according to the load pattern shown in Fig. 8, the voltage value in the transmission term TX reaches the operation lower limit voltage of the load at a time t1 which is longer than the time t0 according to the conventional technique.

The reason for this is that the power assist capacitor 7 has the internal resistance 7a which is set smaller than the internal resistance 1a $\times$ 3 of the power supply (battery), and further has the capacitance capable of the power supplying in the transmission term TX.

An electric double layer capacitor satisfies such a condition and is thus suitable for the power assist capacitor 7 in this embodiment.

In this embodiment, a relationship given by the following equations (4) to (7) is substantially established among the voltage step-down ΔVesr due to the internal resistance 7a of the power assist capacitor 7, the voltage step-down ΔVcap due to the capacitive discharge of the power assist capacitor 7, and the voltage step-down ΔVdp in the sum thereof.

$$\Delta Vesr = ESR \times IcapTX \qquad (4)$$

$$\Delta Vcap = (IcapTX \times tTX)\ /C \qquad (5)$$

$$\Delta Vesr + \Delta Vcap = \Delta Vdp \qquad (6)$$

$$IcapTX < ILTX \qquad (7)$$

where ESR represents the internal resistance of the power assist capacitor 7, tTX the transmission term, and C the capacitance of the power assist capacitor 7.

From the equations (4) to (7), the voltage width $\Delta Vdp$ in the sum of $\Delta Vesr$ and $\Delta Vcap$ decreases as the internal resistance 7a of the power assist capacitor 7 decreases while as the capacitance of the power assist capacitor 7 increases.

In the foregoing load pattern, the power supplying is cooperatively carried out by the battery 2 serving as the power supply and the power assist capacitor 7 at the time of the heavy load while the power assist capacitor 7 is recharged at the time of the light load, so that the voltage step-down at the time of the heavy load can be reduced, thus enabling prolongation of the time to reach the operation lower limit voltage of the load.

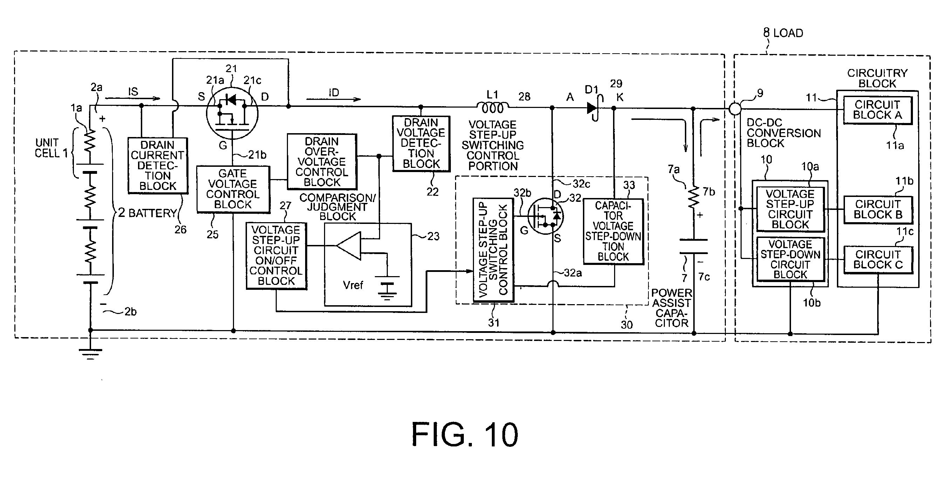

Now, a second preferred embodiment of this invention will be described with reference to the drawings. Fig. 10 is a circuit block diagram showing the second embodiment of this invention.

In Fig. 10, a power circuit comprises a power supply in the form of a battery 2 having a positive electrode 2a with the highest potential and a negative electrode 2b with the lowest potential. The battery 2 is composed of three unit cells 1 connected in series and each having an internal resistance 1 a. The power circuit further comprises a P-type MOS-FET 21 having a source terminal 21 a, a gate terminal 21 b, and a drain terminal 21 c, a drain voltage detection block 22, a comparison/judgment block 23, a drain overvoltage control block 24, a gate voltage control block 25, a drain current detection block 26, a voltage step-up circuit ON/OFF control block 27, a coil 28, a diode 29, and a voltage step-up switching control unit 30. The voltage step-up switching control unit 30 comprises a voltage step-up switching control block 31, an N-type MOS-FET 32 having a source terminal 32a, a gate terminal 32b, and a drain terminal 32c, and a capacitor voltage detection block 33. The power circuit further comprises a power assist capacitor 7 having an internal resistance 7a, a positive electrode 7b, and a negative electrode 7c, and a load 8. The load 8 comprises a power supply unit 9, a DC-DC conversion block 10, and a circuitry block 11. The DC-DC conversion block 10 comprises a voltage step-up circuit block 10a and a voltage step-down circuit block 10b. The circuitry block 11 comprises a circuit block A 11 a, a circuit block B 11 b, and a circuit block C 11c.

The positive electrode 2a of the battery 2 is connected to the source terminal 21 a of the P-type MOS-FET 21 and the drain current detection block 26. The gate terminal 21 b is connected to the gate voltage control block 25, the drain terminal 21 c is connected to the drain current detection block 26, the drain voltage detection block 22, and one end of the coil 28. The other end of the coil 28 is connected to an anode of the diode 29 and the drain terminal 32c of the N-type MOS-FET 32. A cathode of the diode 29 is connected to the capacitor voltage detection block 33, the positive electrode 7b of the power assist capacitor 7 having the internal resistance 7a, and the power supply unit 9 of the load 8. The power supply unit 9 is connected to the circuit block A 11a of the circuitry block 11, and the voltage step-up circuit block 10a and the voltage step-down circuit block 10b of the DC-DC conversion block 10. The voltage step-up circuit block 10a is connected to the circuit block B 11 b, while the voltage step-down circuit block 10b is connected to the circuit block C 11c. The drain voltage detection block 22 is connected to the comparison/judgment block 23 and the drain overvoltage control block 24. The comparison/judgment block 23 is connected to the voltage step-up circuit ON/OFF control block 27. The drain overvoltage control block 24 is connected to the gate voltage control block 25. The voltage step-up circuit ON/OFF control block 27 is connected to the voltage step-up switching control block 31 of the voltage step-up switching control unit 30, while the voltage step-up switching control block 31 is connected to the gate terminal 32b of the N-type MOS-FET 32 and the capacitor voltage detection block 33. The source terminal 32a of the N-type MOS-FET 32 is grounded. Th gate voltage control block 25 is connected to the drain current detection block 26. In this embodiment, ground terminals of the circuits are connected to the negative electrode 2b of the battery 2.

Hereinbelow, description will be made about operations of the circuit blocks in this embodiment.

The total internal resistance of the power supply takes a value in the sum of the three internal resistances 1 a of the unit cells 1 connected in series. The P-type MOS-FET 21 is connected in series to the power supply, and the supply current is detected by the drain current detection block 26 serving to detect a drain current flowing between the source and the drain of the P-type MOS-FET 21.

When the load current is equal to or less than a preset maximum drain current value, the drain current detection block 26 sends to the gate voltage control block 25 a control signal for turning on the P-type MOS-FET 21. On the other hand, when the load current exceeds the preset maximum drain current value, the drain current detection block 26 sends to the gate voltage control block 25 a control signal for restricting the source current to the maximum drain current value.

A shortage of the load current in case of the source current exceeding the maximum drain current is supplemented by discharge of the power assist capacitor 7.

The drain voltage detection block 22 detects a voltage at the drain terminal 21 c and feeds a detection value to the comparison/judgment block 23 and the drain overvoltage control block 24.

The comparison/judgment block 23 compares the drain voltage with a reference voltage and, when the drain voltage is lower than the lower limit value of the operating voltage range of the load, sends a control signal for causing the voltage step-up circuit ON/OFF control block 27 to produce an ON signal.

When the drain voltage is equal to or greater than the lower limit value of the operating voltage range of the load, the comparison/judgment block 23 sends a control signal for causing the voltage step-up circuit ON/OFF control block 27 to produce an OFF signal.

When the drain voltage exceeds a preset voltage value, the drain overvoltage control block 24 feeds a gate control signal to the gate voltage control block 25 to thereby reduce the drain voltage to the preset voltage value.

The power assist capacitor 7 is charged with a drain current ID. The internal resistance 7a of the power assist capacitor 7 has a resistance value that is set smaller than the internal resistance of the battery 2, i.e. the sum of the three internal resistances 1 a connected in series in Fig. 10, so that the power assist capacitor 7 discharges for power assist when the load current exceeds the preset maximum drain current.

The power supply unit 9 serves as a collective power terminal of the load 8 so that the power is supplied to the DC-DC conversion block 10 and the circuitry block 11 of the load 8 via the power supply unit 9.

The circuit block A 11 a is directly supplied with the supply voltage, while the circuit block B 11 b is supplied with a voltage stepped up by the voltage step-up circuit block 10a and the circuit block C 11 c is supplied with a voltage stepped down by the voltage step-down circuit block 10b.

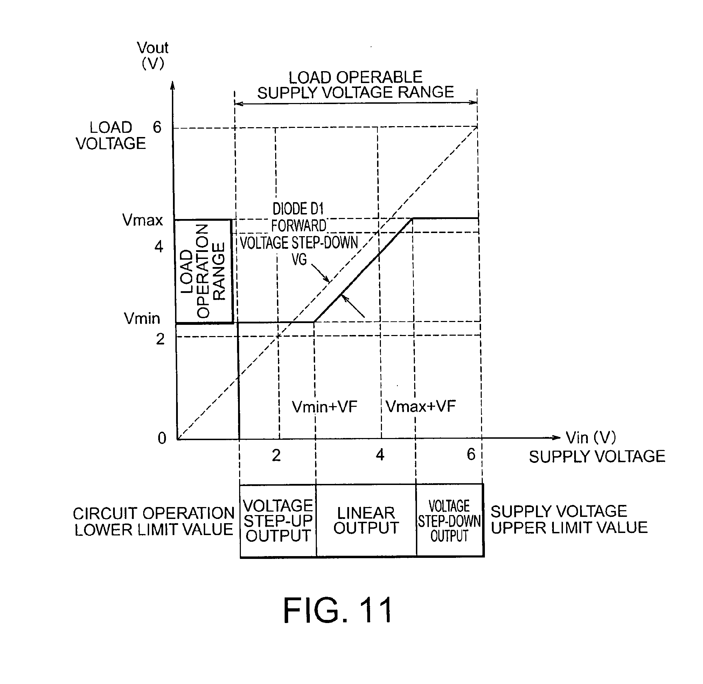

Fig. 11 shows a relationship between the supply voltage and the load voltage, i.e. the voltage applied to the load, according to the second embodiment of this invention, wherein the axis of abscissas represents supply voltage values and the axis of ordinates represents load voltage values.

As shown in Fig. 11, an upper limit value of the drain voltage is preset to an upper limit value Vmax of the operation range of the load.

When the drain voltage detection block 22 detects that the drain voltage has exceeded the upper limit value Vmax of the operation range of the load, it notifies the drain overvoltage control block 24 that the drain voltage is in an overvoltage state.

In response to receipt of the detection of overvoltage from the drain voltage detection block 22, the drain overvoltage control block 24 sends a command for controlling a gate voltage to the gate voltage control block 25.

In response to receipt of the command for controlling the gate voltage from the drain overvoltage control block 24, the gate voltage control block 25 controls the gate voltage of the P-type MOS-FET 21 to thereby step down the drain voltage to a preset voltage value.

When the drain voltage detection block 22 detects that the drain voltage is equal to or less than the upper limit value Vmax of the operation range of the load + VF (since the diode 29 is interposed between the load voltage measuring unit and the drain voltage measuring unit, a forward voltage VF of the diode 29 exerts an influence thereon), an upper limit value of the output current of the power supply is limited by a preset drain current value IDmax because of the control of the gate voltage of the P-type MOS-FET 21 by the gate voltage control block 25. In this event, the supply voltage and the drain voltage are in a linear relationship.

When the drain voltage detection block 22 detects that the drain voltage is a lower limit value Vmin of the operation range of the load + VF (since the diode 29 is interposed between the load voltage measuring unit and the drain voltage measuring unit, the forward voltage VF of the diode 29 exerts an influence thereon), the comparison/judgment block 23 judges that the supply voltage is insufficient, and sends a command to the voltage step-up circuit ON/OFF control block 27 to operate the voltage step-up switching control unit 30. The voltage step-up circuit ON/OFF control block 27 sends to the voltage step-up switching control block 31 a signal for driving a voltage step-up switching converter circuit formed by the coil 28, the diode 29, the voltage step-up switching control unit (including the voltage step-up switching control block 31, the N-type MOS-FET 32, and the capacitor voltage detection block 33), and the power assist capacitor 7.

By the use of the foregoing voltage step-up control means, the load voltage (the voltage applied to the load) continues to be kept within the operating voltage range of the load until the supply voltage reaches the operation lower limit value of the circuit as shown in Fig. 11.

As shown in Figs. 6 and 7, like in the first embodiment of this invention, a proper number of unit cells are connected in series to form a battery as the power supply for matching the operating voltage range of the load with a voltage range that accounts for most of the total discharge time.

As shown in Fig. 8, like in the first embodiment of this invention, in case of the load that periodically repeats a heavy load (transmission term TX) and a light load (reception term RX), the upper limit drain current IDmax is set to a value that is smaller than the current value ILTX of the transmission term TX, but is greater than the current value ILRX of the reception term RX, and is substantially equal to the average current value of the load. The power assist capacitor 7 has a capacitance that is capable of power supplying in the transmission term TX and further capable of completing recharge within the reception term RX.

The P-type MOS-FET is used as the switching element connected in series to the power supply in this embodiment, wherein there can be achieved the same effect as in the first embodiment with respect to the operation in the transmission term TX and the reception term RX.

The use of the P-type MOS-FET requires the following replacement of symbols as compared with the first embodiment. That is, the upper limit collector current ICmax is replaced with the upper limit drain current IDmax, and supply current/voltage IE/VE (emitter) is replaced with IS/VS (source).

Further, the time to reach the operation lower limit voltage of the load in continuous operation of the load pattern shown in Fig. 8 is made longer than the discharge time t1 shown in Fig. 9 by the use of the voltage step-up control means operated at the lower limit value of the operation range of the load.

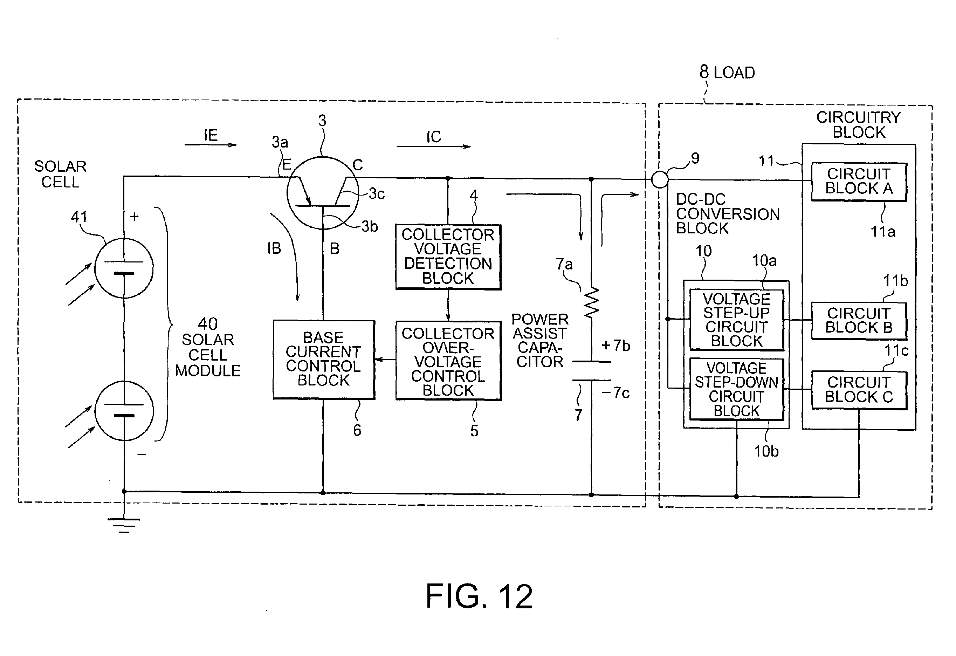

Now, a third preferred embodiment of this invention will be described with reference to the drawings. Fig. 12 is a circuit block diagram showing the third embodiment of this invention. In this embodiment, the power supply in the first embodiment of this invention is formed by a solar cell module 40.

Since an electromotive force of a solar cell is as small as 1 V or less, a plurality of solar cells 41 are connected in series to increase the total voltage. The solar cells 41 connected in series in this manner is called the solar cell module 40 which is disposed as the power supply in this embodiment.

Like in the first embodiment of this invention, the number of the solar cells 41 connected in series is determined so that the operating voltage range of the load matches operating points of the solar cell module 40 where the power generation efficiency is high. Accordingly, like in the first embodiment of this invention, the highly efficient operation of the load can be achieved.

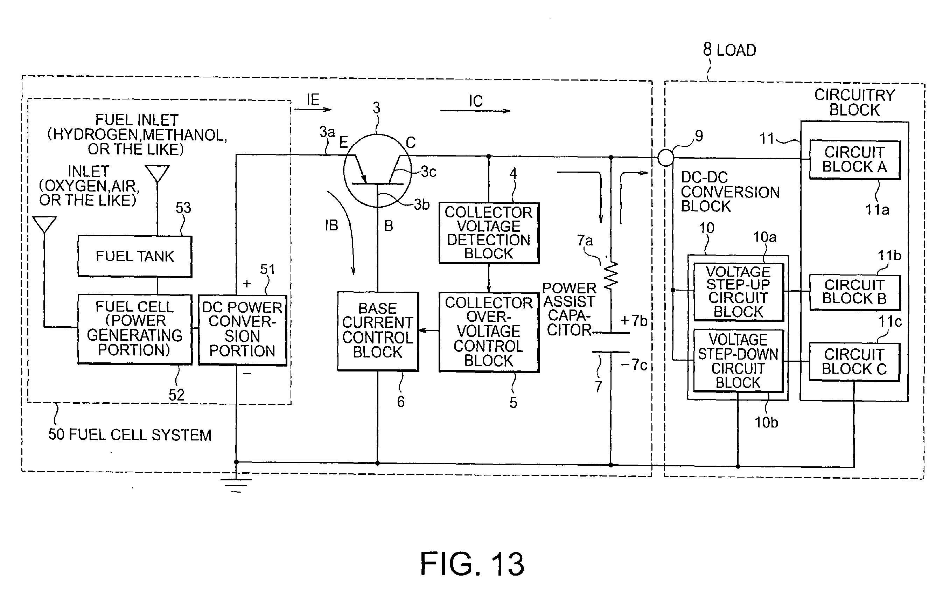

Now, a fourth preferred embodiment of this invention will be described with reference to the drawings. Fig. 13 is a circuit block diagram showing the fourth embodiment of this invention. In this embodiment, the power supply in the first embodiment of this invention is formed by a fuel cell system 50.

The fuel cell system is a system for generating the power by mixing oxygen and hydrogen. In the system, hydrogen, methanol, or the like is used as fuel.

The fuel cell system 50 comprises a DC power conversion unit 51, a fuel cell (power generating unit) 52 having an inlet for oxygen, air, or the like, and a fuel tank 53 having a fuel inlet for hydrogen, methanol, or the like. The generated power is rectified and smoothed into the stable DC power by the DC power conversion unit 51.

By determining a battery configuration (fuel cell 52) so that the operating voltage range of the load matches operating points of the fuel cell system 50 where the power generation efficiency is high, the highly efficient operation of the load can be achieved like in the first embodiment of this invention.

As described above, in the power circuit according to this invention, when the output voltage of the power supply exceeds the upper limit value of the operating voltage range of the load, the charged voltage of the power assist capacitor disposed at the power supply unit of the load is stepped down to the predetermined voltage value within the operating voltage range of the load. Therefore, even when the battery temporarily generates a high voltage exceeding the upper limit value of the operating voltage range of the load in the state where, for example, the battery is fully charged in the no-load condition, it is possible to stably start the operation of the load.

When the output voltage of the power supply exceeds the upper limit value of the operating voltage range of the load, the charged voltage of the power assist capacitor is stepped down to the predetermined voltage value within the operating voltage range of the load by the voltage step down control means. Therefore, even when a high battery voltage is generated so as to exceed the upper limit value of the operating voltage range of the load in the state where, for example, the battery is fully charged in a no-load condition, it is possible to stably start the operation of the load.

On the other hand, when the output voltage of the power supply is within the operating voltage range of the load, the charged voltage of the power assist capacitor is controlled to the voltage value substantially equal to the output voltage of the power supply by the linear voltage control means and the power supply in the form of the battery formed by a proper number of unit cells connected in series, which can generate voltage values in operating the load such that most of time in time transition of the output voltage of the power supply falls within the operating voltage range of the load. Therefore, since voltage conversion means is not used, the highly efficient discharge can be achieved over a long time. Further, since the charged voltage of the power assist capacitor is in a linear relationship with the battery voltage, it is possible to use it as a monitor voltage for monitoring the discharge state of the battery.

In the power range necessary for operating the toad, the upper limit of the output current of the power supply is controlled by the predetermined current value. The electric double layer capacitor having the internal resistance value smaller than that of the power source and having the capacitance that enables the power supplying to the load during the time when the load current exceeds the upper limit value of the output current of the power supply, is disposed at the power supply unit of the load. Since the power assist capacitor discharges in the overload condition where the load current exceeds the upper limit value of the output current of the power supply, it is possible to restrict the voltage step-down caused by the internal resistance of the battery. In this manner, it is possible to avoid the occurrence of battery-off warning, power shut-down, or the like caused by the battery voltage temporarily becoming lower than the operation lower limit voltage of the load due to the temporary overload although the battery still has the remaining capacity.

While this invention has thus far been described in connection with the preferred embodiments thereof, it will be readily possible for those skilled in the art to put this invention into practice in various other manners without departing from the scope of this invention.

## Claims

1. A power circuit using a primary battery, a secondary battery, a solar cell, or a fuel cell as a power supply (2), wherein said power circuit comprises:

   voltage step down control means (4) for stepping down a charged voltage of a power assist capacitor (7) to a predetermined voltage value within an operating voltage range of a load (8) when an output voltage of said power supply (2) exceeds an upper limit value of the operating voltage range of the load (8);
   linear voltage control means (6) for controlling the charged voltage of said power assist capacitor (7) to a voltage value substantially equal to the output voltage of said power supply (2) when the output voltage of said power supply (2) falls within the operating voltage range of the load (8); and
   current control means (5) for controlling an upper limit value of the output current of said power supply (2) using a predetermined current value in a power range necessary for operating the load (8),
   said power assist capacitor (7) charged by the output current of said power supply (2) being disposed at a power supply unit of the load (8).

2. A power circuit according to claim 1, wherein said power supply (2) is a battery formed by a predetermined number of unit cells connected in series, said battery capable of electromotive force values in operating the load (8) such that most of time in time transition of the output voltage of said power supply (2) falls within the operating voltage range of the load (8).

3. A power circuit according to claim 1 or 2, wherein said voltage step down control means (4) detects a charged voltage value of said power assist capacitor (7) and steps down it to the predetermined voltage value within the operating voltage range of the load (8).

4. A power circuit according to one of claims 1 to 3, wherein said linear voltage control means (6) turns on switching means (3) connected in series to said power supply (2).

5. A power circuit according to one of claims 1 to 4, wherein said current control means controls (5) a current or a voltage as a control input to switching means (3) connected in series to said power supply (2).

6. A power circuit according to one of claims 1 to 5, wherein said power assist capacitor (7) is of an electric double layer type and has an internal resistance value smaller than that of said power supply (2).

7. A power circuit according to any one of claims 1 to 6, wherein said power assist capacitor (7) is of an electric double layer type and has a capacitance that is capable of power supplying to the load during a time when a load current exceeds the upper limit value of the output current of said power supply (2).

FIG. 1
PRIOR ART

EP 1 528 654 A1

FIG. 2
PRIOR ART

SUPPLY VOLTAGE

LOAD OPERATION LOWER LIMIT VOLTAGE

$\Delta V_{dpx}$

0

t0

DISCHARGE TIME

FIG. 3
PRIOR ART

FIG. 4

FIG. 5

DISCHARGE CHARACTERISTIC (TIME VS.VOLTAGE)
THREE AAA ALKALINE DRY BATTERIES
CONNECTED IN SERIES
0.5A CONTINUOUS DISCHARGE

FIG. 6

16

DISCHARGE CHARACTERISTIC
(FREQUENCY DISTRIBUTION)
THREE AAA ALKALINE DRY BATTERIES
CONNECTED IN SERIES
0.5A CONTINUOUS DISCHARGE

FIG. 7

FIG. 8

SUPPLY VOLTAGE

LOAD OPERATION LOWER LIMIT VOLTAGE

$\Delta Vdp$

0    t0    DISCHARGE TIME    t1

FIG. 9

EP 1 528 654 A1

FIG. 10

FIG. 11

Vout (V)

LOAD VOLTAGE

LOAD OPERABLE SUPPLY VOLTAGE RANGE

LOAD OPERATION RANGE

DIODE D1 FORWARD VOLTAGE STEP-DOWN VG

Vmax

Vmin

Vin (V)
SUPPLY VOLTAGE

SUPPLY VOLTAGE UPPER LIMIT VALUE

CIRCUIT OPERATION LOWER LIMIT VALUE

VOLTAGE STEP-UP OUTPUT

LINEAR OUTPUT

VOLTAGE STEP-DOWN OUTPUT

Vmin+VF

Vmax+VF

FIG. 12

FIG. 13

**European Patent Office**

# EUROPEAN SEARCH REPORT

Application Number

EP 04 02 2505

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/028571 A1 (KAKIUCHI SHINICHI ET AL) 11 October 2001 (2001-10-11) | 1-5 | H02J7/34 |
| Y | * paragraph [0004] - paragraph [0010]; figures 4,5,14 * <br> * paragraph [0069] - paragraph [0081] * <br> ----- | 6,7 | |
| X | US 2003/164644 A1 (SASAKI HIROSHI) 4 September 2003 (2003-09-04) | 1-5 | |
| Y | * paragraph [0069] - paragraph [0133]; figures 2-5,7 * <br> ----- | 6,7 | |
| X | WO 03/056684 A (SMITH TREVOR ; TURNER GEOFF (AU); ENERGY STORAGE SYSTEMS PTY LTD (AU)) 10 July 2003 (2003-07-10) * page 5, line 5 - page 14, line 11; figures 1,2 * <br> ----- | 1,2,4,5 | |
| P,X | EP 1 445 780 A (NEC TOKIN CORP) 11 August 2004 (2004-08-11) * paragraph [0047] - paragraph [0072]; figures 3,7-9 * <br> ----- | 1-7 | TECHNICAL FIELDS SEARCHED (Int.Cl.7) |
| X | CH 692 831 A (HOCHSCHULE FUER TECHNIK & ARCH) 15 November 2002 (2002-11-15) * column 8, line 9 - line 44; figure 2 * <br> ----- | 1,2 | H02J |

The present search report has been drawn up for all claims

| Place of search | Date of completion of the search | Examiner |
|---|---|---|
| Munich | 12 January 2005 | Zeng, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                          EP 04 02 2505

This annex lists the patent family members relating to the patent documents cited in  the above-mentioned European search report.
The members are as contained in the European Patent Office EDP file on
The European Patent Office is in no way  liable for these particulars which are merely  given for the purpose of information.

12-01-2005

| Patent document cited in search report | | Publication date | Patent family member(s) | | Publication date |
|---|---|---|---|---|---|
| US 2001028571 | A1 | 11-10-2001 | JP | 2001298861 A | 26-10-2001 |
| | | | JP | 2001296928 A | 26-10-2001 |
| | | | JP | 2001298862 A | 26-10-2001 |
| | | | JP | 2001327093 A | 22-11-2001 |
| US 2003164644 | A1 | 04-09-2003 | JP | 2003250228 A | 05-09-2003 |
| | | | CA | 2419570 A1 | 21-08-2003 |
| | | | CN | 1440104 A | 03-09-2003 |
| | | | DE | 10307317 A1 | 30-10-2003 |
| WO 03056684 | A | 10-07-2003 | WO | 03056684 A1 | 10-07-2003 |
| | | | US | 2004263127 A1 | 30-12-2004 |
| EP 1445780 | A | 11-08-2004 | JP | 2004297753 A | 21-10-2004 |
| | | | CA | 2445893 A1 | 07-08-2004 |
| | | | EP | 1445780 A1 | 11-08-2004 |
| | | | US | 2004155634 A1 | 12-08-2004 |
| CH 692831 | A | 15-11-2002 | CH | 692831 A5 | 15-11-2002 |

EPO FORM P0459

For more details about this annex : see Official Journal of the  European Patent Office, No. 12/82